# EUROPEAN PATENT APPLICATION

(11) **EP 0 799 788 A1**
(43) Date of publication of application: **08.10.1997**
(21) Application number: 95940472.4
(22) Date of filing: 19.12.1995
(51) Int. Cl.: B66F 3/28

(54) **ROD-SHAPED EXTENSION BODY**

(30) Priority: 19.12.1994 JP 334513/94; 26.05.1995 JP 152542/95; 24.10.1995 JP 300592/95
(71) Applicant: Sanin Boruto Seisakusho Co. Ltd., Shimane 690 (JP)
(72) Inventor: ABE, Kichisaburo Sanin Boruto Seisakujo Co., Ltd., Shimane 690 (JP)
(74) Representative: Godwin, Edgar James
(86) International application number: JP9502606
(87) International publication number: WO9619405

(57) **Abstract**

In the present invention, two or more hoist units (1) including a bendable chain or belt are put close to each other along a single axial core so that the tops of the hoist units (1) are integrally connected and fixed in close vicinity to each other. Multiple regulating members (7) are protruded from the opposite peripheral faces of the hoist units (1) to hold the hoist units (1) in the form of a single rod by regulating all the hoist units (1) from being freely bent in such a state that the hoist units (1) are brought into close contact with and overlapped with each other.

Each regulating member (7) is formed such that the regulating members put close to each other are allowed to be curved outward and separated from each other on the side opposite to the side, on which the hoist units (1) are connected. With this mechanism, the hoist units (1) are paid out in the form of a rod or freely bent like a chain or belt and housed. A driving wheel (40) brought into contact with the periphery of each hoist unit (1) is axially supported to each base end of the hoist units (1) put close to each other in the form of a rod so as to rotate the driving wheel normally and reversely. A drive unit (3) for rotating the drive wheels (40) to pay out the hoist units (1) in the form of a rod or house the hoist units is provided to cause the actuation of paying out or housing the rod.

## Description

### TECHNICAL FIELD

This invention relates to a rod-like hoist unit including two or more hoist units such as chains and belts, which are unified in the form of a single rod at the top in paying out, while the rod-like hoist unit is separated into two or more hoist units at the base end in housing, and also relates to a rod-like hoist unit which covers a long stroke and requires a narrow space for housing.

### BACKGROUND ART

Heretofore, as a well-known component of a machine for linearly pushing out and reciprocating a rod-like member, there are a hydraulic cylinder, a mechanism including a rack engaged with a pinion, a screw mechanism for making reciprocation by rotating a screw subjected to thread cutting, or the like.

However, any of the above reciprocating mechanisms requires a housing of a length corresponding to the push-out extent of a cylinder rod, a rack or a screw. Therefore, if the length of a rod housing is not enough for the extent of required movement of a vertically movable part or a transversely movable part of a machine, it is difficult to adopt such a reciprocating mechanism. In the reciprocating mechanisms as described above, for the purpose of obtaining a long stroke, it is necessary to increase the sectional area of the rod, rack or screw so as to attain strength suitable for the extent of such a long stroke, and a large-sized motor suitable for the extent of such a sectional area is required. Further, most frequently-used oil-hydraulic cylinders or air cylinders present problems in that complicated piping and pressure equipments such as a control valve are required to actuate such hydraulic cylinders or air cylinders.

Generally, for a reciprocating mechanism which covers a long stroke, use is made of a mechanism for reciprocating a belt or chain which is wound between two pulleys or sprockets. However, restrictions are placed on this mechanism such that the belt or chain should be always strained along a locus to reciprocate a specified substance. Further, when a belt or chain unit is reciprocated, a guide in the form of a rail for the rod or chain is required, as a substitute for the rod, since the belt or chain does not exert rigidity differently from the rod.

Therefore, an object of the present invention is to provide a rod-like hoist unit which does not require a linearly long space for housing a rod as described above, and a chain guide or the like.

Another object of the present invention is to provide a rod-like hoist unit which comprises a plurality of hoist units including chains or belts and provided with regulating members for regulating the rod-like hoist units from being bent so as to hold the hoist units in the form of a single rod when the hoist units are unified in close vicinity to each other, wherein the rod-like hoist unit is linearly pushed out on the side of a pay-out end of each hoist unit, while being separated on the side of a housing end into chain or belt units, which are then respectively housed.

A further object of the present invention is to provide a mechanism which allows a rod to exert rigidity more firmly when a load is applied to a hoist unit, a mechanism which prevents the rod from being actuated in the direction reverse to the pay-out direction due to a load applied to the rod, and a mechanism which enables housing of the hoist unit on the side of a housing end more smoothly and more compactly.

### DISCLOSURE OF THE INVENTION

According to the present invention, two or more hoist units (1) including a bendable chain or belt are put close to each other along a single axial core, and the tops of the hoist units (1) are integrally connected and fixed in close vicinity to each other. Multiple regulating members (7) are provided to be protruded from the opposite peripheral faces of the hoist units (1) so as to hold the hoist units (1) in the form of a single rod by regulating all the hoist units (1) from being freely bent in a state that the hoist units (1) are brought into close contact with each other and also overlapped with each other.

The regulating members (7) are formed such that these regulating members put close to each other are allowed to be curved outward and then separated from each other on the side opposite to the side, on which the hoist units (1) are connected to the regulating members. With this mechanism, each hoist unit (1) is paid out in the form of a rod, or freely bent like a chain or belt and then housed. A driving wheel (40) brought into contact with the outer periphery of each hoist unit (1) is axially supported on the side of each base end of the hoist units (1) put close to each other in the form of a rod so that the driving wheel is rotated normally and reversely. A drive unit (3) for rotating the driving wheels (40) to pay out the hoist units (1) in the form of a rod or house the hoist units is provided to cause the actuation of paying out or housing the rod.

Further, the faces to be overlapped of the regulating members (7) are protruded sideward from the hoist units (1) by an extent larger than the width of each hoist unit (1), or the contact faces of the regulating members (7) are formed along the axial core of the rod.

Otherwise, the regulating member (7) of one of the opposite hoist units (1) is alternately interposed between the regulating members (7) of the other hoist unit (1), and engaged therewith so that the regulating members (7) of the opposite hoist units are overlapped with each other. Further, the regulating members are structured such that two faces to be overlapped of each regulating member (7) are inclined so as to be matched with two faces to be overlapped of the regulating member (7) on the other side, and the inclined faces act so as to put the hoist units (1) close to each other in response to a pressure load applied in the axial core direction of the rod.

Otherwise, in each regulating member (7), its faces to be overlapped with the faces of the adjacent regulating member (7) are formed such that the regulating members (7) themselves are engaged with each other in an overlapped state, and the opposite hoist units (1) themselves are fixed to each other. The rigidity of the rod is enhanced by these mechanisms.

A worm gear (33) rotated integrally with each driving wheel (40) and a worm (32) axially supported to rotate the worm gear (33) in engagement with the worm gear (33) are provided in the drive unit (3) to constitute an irreversible rotation driving unit.

The rod-like hoist unit as described above has a housing 5 provided on the housing side of each hoist unit (1) through the driving wheel (40) to house the hoist unit (1) separated and driven to the housing side. Further, the housing (5) has a housing guide (52) provided in a cover case (51) to spirally guide the end on the housing side of the hoist unit (1) for housing. With this mechanism, the rod portion is separated into individual hoist units (1) through housing operation and then housed compactly and smoothly in a narrow space.

### BRIEF DESCRIPTION OF THE DRAWINGS

Fig. 1 is a front view showing the overall configuration of a first embodiment of a device according to the present invention; Fig. 2 is a plan view of the same; Fig. 3 is a right side view of the same; Fig. 4 is a partial sectional view showing a mechanism of a section for synchronously rotating right and left driving wheels; Figs. 5 (A) and (B) are an enlarged-scale front view and a partial plan view showing the structure of a hoist unit, respectively;
Figs. 6 and 7 are partial front views showing different embodiments of the hoist unit, respectively;
Fig. 8 is a front view showing the overall configuration of a hoist device with a different housing structure; Fig. 9 is a plan view of the same;
Fig. 10 is a front sectional view showing another embodiment of a drive unit and a regulating member of a hoist unit; Figs. 11 (A) and (B) are a plan view and a perspective view showing the structure of the regulating member, respectively; Fig. 12 is a side sectional view of a drive mechanism section;
Figs. 13 (A) and (B) are perspective views when a hoist unit is applied to a jack, respectively;
Fig. 14 is a perspective view showing an application when a hoist unit is used for a jack of a simplified crane vehicle and a crane arm extension device;
Figs. 15 (A), (B), (C) and (D) are perspective views showing an embodiment of a jack constituted by unifying four or three chains together in the form of a rod and plan views of a rod, respectively;
Figs. 16 and 17 are perspective views of a lifting device as the application of a hoist unit according to the present invention, respectively;
Fig. 18 is a perspective view of parking facilities as the application of a hoist unit according to the present invention;
Figs. 19 (A) and (B) are perspective views of a crane and a ladder truck as the application of a hoist unit according to the present invention, respectively;
Fig. 20 is a perspective view of a horizontal carrier system as the application of a hoist unit according to the present invention; and
Fig. 21 is a perspective view of a curtain booth as the application of a hoist unit according to the present invention.

### BEST MODE FOR EMBODYING THE INVENTION

Hereinafter will be described embodiments of the present invention with reference to the drawings.

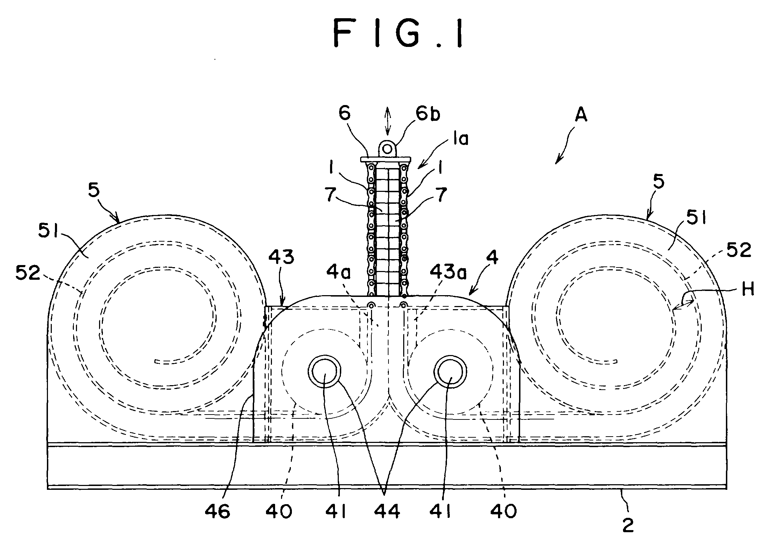

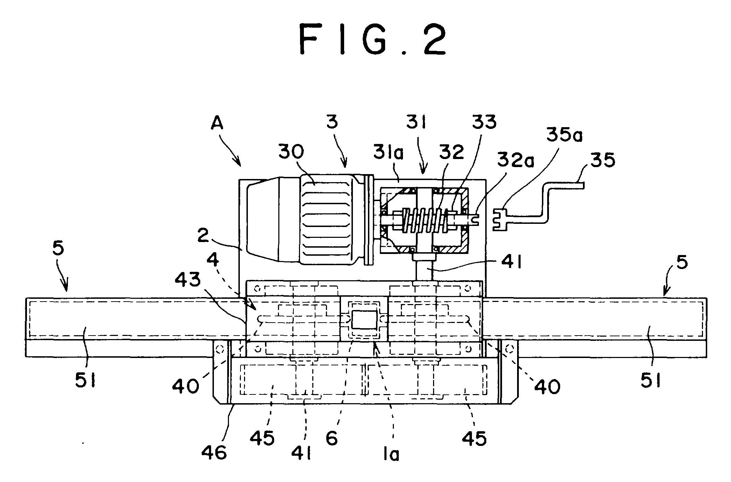

Referring to Figs. 1 and 2, 'A' denotes a hoist device for hoisting an actuating section la composed of a pair of left and right chains 1 (hoist units) so that the actuating section is capable of being advanced and retreated. The hoist device A comprises a drive unit 3 composed of a motor 30 and a transmission mechanism 31 or the like which are installed on a base 2, a pay-out section 4 housing a drive sprocket (driving wheel) 40 driven to be rotatable normally and reversely, and housing sections 5, 5 communicating with both pay-out routes 4a in the pay-out section 4 to house the left and right chains 1 individually.

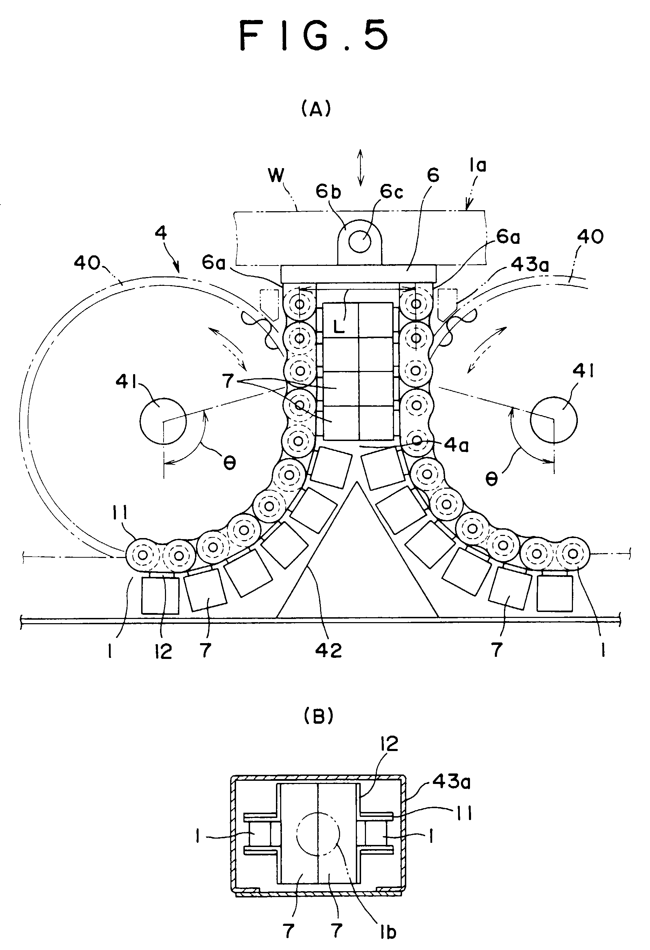

In the above actuating section 1a, a pair of chains 1, 1 wound around the left and right drive sprockets 40 are combined with each other as shown in Fig. 5. When each drive sprocket 40 is rotated normally in the direction shown by a solid arrow, the left and right chains 1 are drawn out from the respective housings 5 and then paid out upward while forming a rod. On the other hand, when each drive sprocket 40 is rotated reversely in the direction shown by a broken arrow, the chains 1, 1 are rolled up and then housed in the left and right housings 5, 5 separately.

Tops of a pair of paid-out chains 1, 1 are pivotally attached at a predetermined interval to mounting legs 6a, 6a protruded from a plate-like connection member (actuating member) 6. The chains 1, 1 are respectively attached to regulating members 7 of the same block shape through mounting portions 12, which are formed by bending the end of each link plate 11 at right angles on the opposite sides, by means of welding or screwing the regulating members to the mounting portions. The regulating members 7 are formed such that when the chain 1 is extended linearly, the adjacent regulating members 7 themselves are overlapped with each other to form a single rod together with the chain 1, and each regulating member is made wider than the chain as shown in Fig. 5 (B).

With the above mechanism, the regulating members 7 themselves adjacent to each other in the advance or retreat direction are overlapped with each other, and as a result, each chain 1 is regulated from being bent. When the chains 1, 1 are paid out, the left and right regulating members 7 are joined face to face with each other within an interval (predetermined interval) L between the pair of chains respectively connected at the tops, and as a result, the chains 1, 1 provide the rod-like actuating section la having high rigidity. Thus, this actuating section may be extended freely by a distance equivalent to the length of the chain 1 housed.

The chain 1 is wound around each drive sprocket 40 at a contact angle θ during extension or retraction, and a load applied to the connection member 6, that is, pressure in extension of the chain or tensile force in retraction of the chain is supported in a distributed state by each tooth 40a (approximately 8 teeth in the illustrated embodiment) within the contact angle θ of the drive sprocket 40 through the respective chains 1, 1. As a result, the rod-like actuating section la exerts sufficient durability against a high load, and enables actuation and support of an actuated member W and also smooth advance and retreat of the chains 1, 1.

An angle-shaped guide 42 making contact with top faces of the left and right regulating members 7 to prevent the chain 1 from hanging is installed at the lower center of the pay-out route 4a. However, since a load applied to the chain 1 is received by the sprocket 40, there is no possibility that any high load is applied to this guide 42.

A pipe sleeve 43a for smoothing the advancing and retreating actuation of the chains 1, 1 is mounted on a casing 43 of the pay-out section in the upper part of the pay-out route 4a.

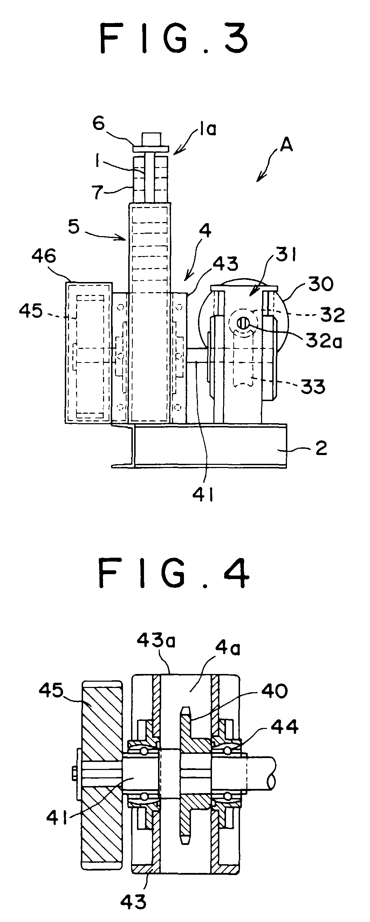

As shown in Figs. 2 to 4, rotating shafts 41, 41 for supporting the drive sprockets 40 are axially supported by the casing 43 through bearing metals 44. Synchronous gears 45, 45 are fitted and fixed in a mutually engaged state to the axial ends of the rotating shafts 41,41. The gears 45, 45 are housed in a transmission case 46.

One rotating shaft 41 is connected to the transmission mechanism 31 including worm transmission means in the drive unit 3 installed at the back of the pay-out section 4, and this transmission mechanism 31 is connected to the motor 30 and driven to allow switching between the normal rotation and the reverse rotation and to allow adjustment of rotating speed.

That is, the transmission mechanism 31 driven by the motor 30 is constituted by engaging a worm 32 fitted to a motor output shaft with a worm gear 33 fitted to the above rotating shaft 41 in a transmission case 31a. When the motor 30 is driven normally to rotate the drive sprockets 40, 40 in the direction shown by a solid arrow, the chains 1, 1 are paid out from the respective housings 5 and ascended (extended). The paid-out chains 1, 1 are descended (retracted) by driving the motor 30 reversely, and then actuated so as to be housed in the respective housings 5.

When the motor 30 is stopped, the transmission mechanism 31 composed of the worm 32 and the worm gear 33 prevents the rotation for advancing and retreating actuation. Thus, even if the power is disconnected due to power failure or the like in advancing and retreating actuation, the actuating section la stays at its actuating position at a time when the motor is stopped, so that it is possible to prevent the unexpected malfunction of the actuated member W.

As shown in Fig. 2, a manually operating handle 35 having a detachable engagement portion 35a is fitted to a fixing portion 32a formed at the axial end of the worm 32, and as a result, the worm 32 may be manually operated when the power failure or the failure of the motor 30 occurs. Besides, manually minute adjustment for advancing and retreating actuation may be easily performed. With the above constitution, it is possible to provide a hoist device A for manual operation.

In the housing 5 shown in Fig. 1, a housing guide 52 for the chain 1 is provided spirally in a drum-shaped cover case 51 at an interval of H which permits the passage of the chain. With this housing guide 52, the chain 1 is housed in the cover case 51 smoothly and compactly. The housing guide 52 guides the chain 1 while being in contact with the top faces of the regulating members 7, and as a result, resistance at the time of housing is reduced to enable smooth housing operation.

The structure of the housing for the chain 1 is not limited to that shown in the drawings. For example, if the chain 1 is advanced and retreated in a short stroke, it may be structured that the housing side of the chain 1 may be housed freely.

According to the above constitution, with the drive sprockets 40, 40 driven by the normal rotation of the motor 30 through the transmission mechanism 31 and the synchronous gears 45, 45 in the direction shown by a solid arrow, the chains 1, 1 are extended and paid out upward from the pay-out route 4a, while the regulating members 7 are sequentially joined together, and as a result, the actuating section la in the form of a rod is formed. This actuating section 1a serves as a columnar member having rigidity, and is advanced and retreated to enable reciprocation of the connection member 6 and the actuated member W connected to the connection member.

In the actuating section la, since the heads of the tops of the chains 1, 1 are connected together through the connection member 6, the regulating members 7 regulate a pair of chains 1 from being bent to the opposite sides to thereby prevent the chains 1 from being bent inward and outward (in the opposite directions), and the link connection of the chain 1 and the connection of the regulating members 7 in a wide range prevent the chains 1 from being bent to the side, it is possible to obtain the rigidity of the chain in extension. The reciprocating (advancing and retreating) stroke of the actuating section la may be set as desired by setting the housing length of the chain 1 at an arbitrary extent.

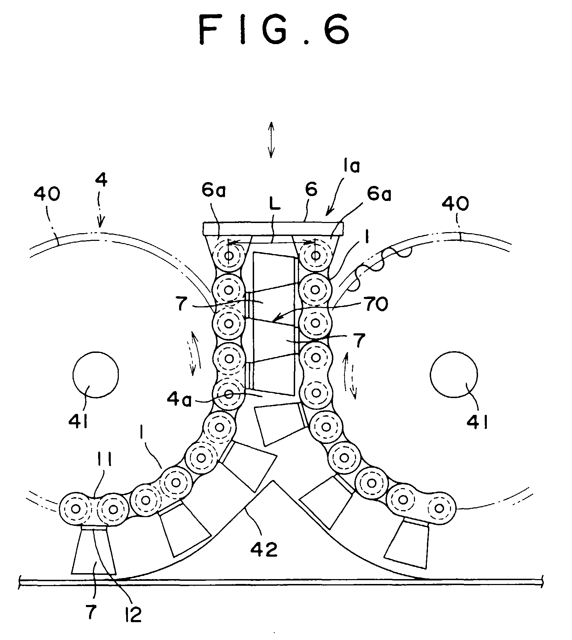

A description will now be given of another embodiment of the actuating section shown in Fig. 6. Each regulating member 7 attached to the chain 1 takes the shape of a trapezoid when viewed from the side, and functions as a mechanism, in which the regulating members are protruded from the opposite chains 1, 1 so as to be alternately reverse to each other every pitch, and engaged with each other in an extending posture to be joined together in an overlapped state.

In this embodiment, the regulating members 7 attached to each chain 1 act so as to attract a pair of chains 1, 1 to each other upon receipt of a load of the chain in the advancing or retreating direction. As a result, the chain 1 may be advanced and retreated not only in the vertical direction, but also in the diagonal and transverse directions.

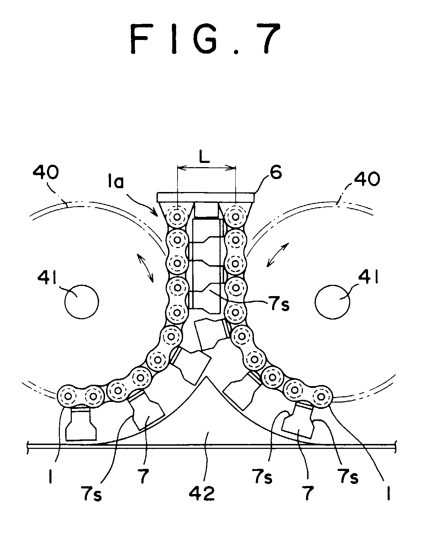

Fig. 7 shows a further embodiment of the actuating section la. This embodiment is common to the embodiment shown in Fig. 6 in that the regulating members 7 of a pair of chains 1,1 are alternately protruded between the opposite faces of the chains, and engaged with each other according as the chains are linearly paid out, and that the engaged regulating members 7 themselves act so as to attract the chains 1, 1 to each other upon receipt of a load applied to the actuating section la.

However, in this embodiment, the top of each regulating member 7 when viewed from the side is formed wider than the base end thereof, and has an inclination face 7s formed between the top and the base end which are different in level. Therefore, when the mutually-adjacent regulating members 7, 7 of the left and right chains 1,1 are alternately engaged with each other according as the chains are paid out, the left and right chains 1 are engaged with each other through the regulating members 7,7, while the chains are not separated from each other unless the regulating members are separated from each other by means of unwinding.

The advantages of both the embodiments shown in Figs. 6 and 7 are that the regulating members 7 may be reduced in number, and besides, two chains are strongly connected together, in particular, the rod exerts high rigidity when a load is applied downward.

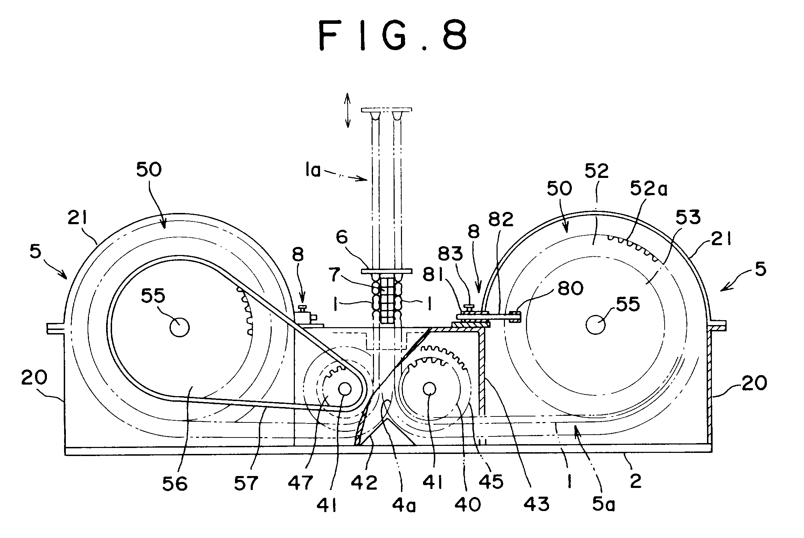

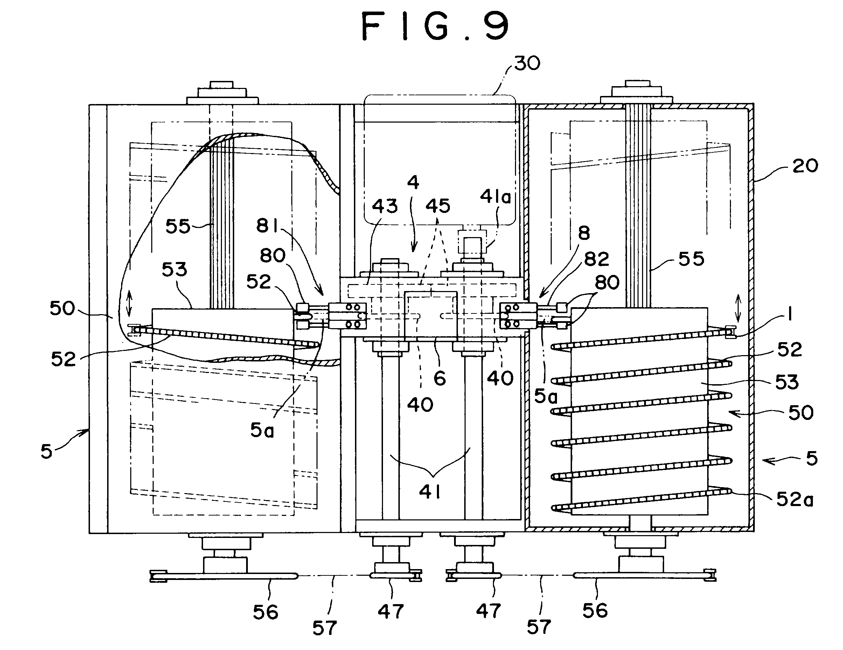

Figs. 8 and 9 show another embodiment of the chain housing 5 according to the present invention, and in this embodiment, each housing 5 houses a winding device including a drum-shaped winding wheel 50. The winding device 5 is structured such that the winding wheel 50 for spirally winding up a long belt unit 1 such as a chain so that the belt unit is capable of being advanced and retreated is axially supported so that the winding wheel 50 is capable of being rotated normally and reversely, and also capable of being reciprocated axially within a case 20. The upper part of the case 20 is covered with a case cover 21 so that the case cover is capable of being opened or closed.

The winding wheel 50 in this embodiment includes a protruded housing guide 52 formed by spirally winding in the axial direction on the periphery of a drum-shaped rotary body 53, and teeth 52a formed on the periphery of the guide 52 to engage with the chain 1, and functions as a mechanism of spirally winding up the chain 1 on the periphery of the winding wheel 50. In this mechanism, the housing end of the chain 1 is fixed to the trailing end of the guide 52.

The above winding wheel 50 is supported by a slide shaft (rotating shaft) in the form a spline rotatably provided in the lateral direction in the case 20 so that the winding wheel is slidably moved in the left and right directions. A protruded guide 8 is provided on a case 43 above the extension of the pay-out route 4a. The spiral guide 52 is guided while being regulated by the protruded guide 8 according as the slide shaft 55 is rotated normally and reversely, and as a result, the winding wheel 50 is reciprocated in the axial direction, while keeping the position of a pay-out section 5a of the belt unit 1 fixed.

The above slide shaft 55 is rotated together with the above drive sprocket 40 by winding a transmission chain 57 between a sprocket 56 fitted to the axial end of the slide shaft and a sprocket 47 fitted to the end of the rotating shaft 41.

For the number of the teeth of each sprocket on which the chain 1 and the transmission chain 57 are wound, the teeth of the drive sprocket 40 is set at 20, the teeth of the winding wheel 50 is set at 60, the teeth of the sprocket 47 is set at 15 and the teeth of the sprocket 56 is set at about 45.

The above protruded guide 8 is supported by laterally inserting a supporting rod 82, which axially supports a roller-shaped guide member 80 brought into rolling contact with the surface of a plate from both sides of the above guide 52, into an axially cylindrical holder 81 fixed to an upper part of the casing 43. The supporting rod 82 is provided so as to be axially adjusted with a fixing bolt 83 with respect to the holder 81. The above guide member 80 is brought into rolling contact with a plate-like portion below the teeth 52a of the guide 52 from both sides, and laterally moves the winding wheel 50 according as the winding wheel 50 is rotated.

In the above winding mechanism, the chain 1 is wound spirally along the guide 52 of the winding wheel 50, and the winding wheel 50 is rotated through the rotating shaft 41 of the drive sprocket 40, the sprockets 47 and 56 and the transmission chain 57. With this actuation, while the winding wheel 50 is rotated normally and reversely according as the chain 1 is advanced and retreated, the guide 52 is guided and regulated by the guide members 80, 80 of the protruded guide 8 and then moved in the axial direction of the slide shaft 55.

Therefore, the relative position between the pay-out route 4a for the chain 1 and the pay-out section 5a at the winding start end of the winding wheel 50 is always fixed, and in this state, the winding wheel 50 may be actuated in the direction shown by a dotted line in Fig. 9 to pay out the chain 1 at the time of housing the chain 1, while the winding wheel 50 may be actuated in the direction shown by a solid line in Fig. 9 to smoothly house the chain 1 by means of winding at the time of retreating the chain 1.

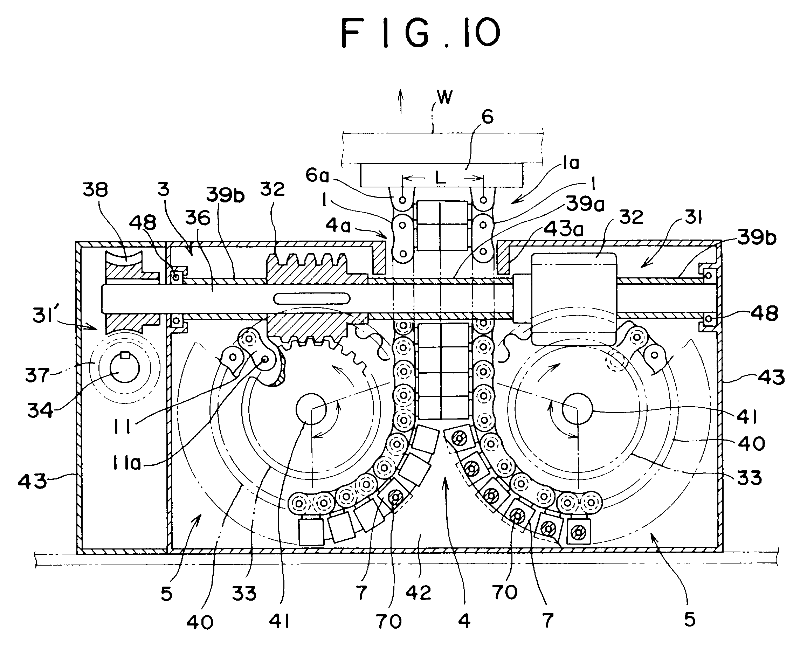

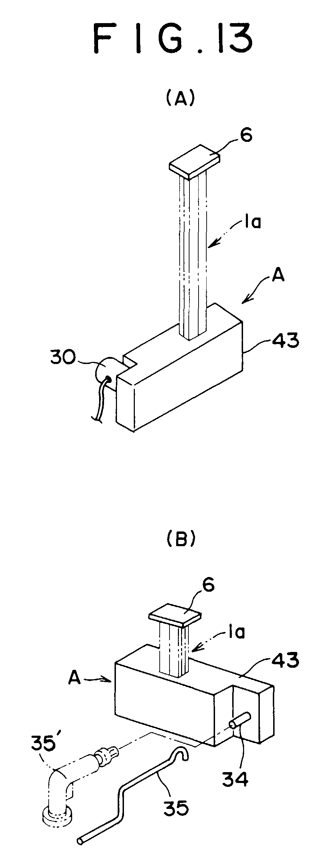

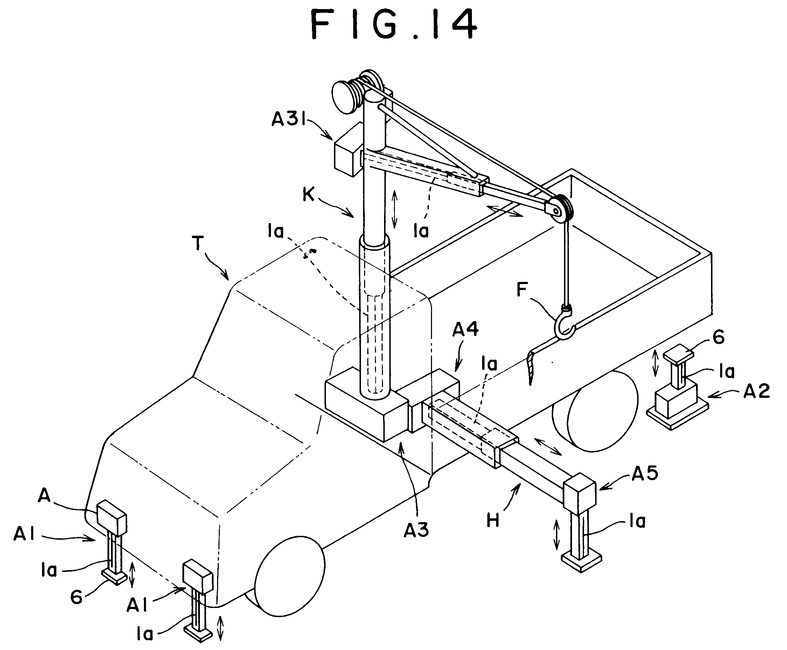

Figs. 10 to 14 show other embodiments according to the present invention. Fig. 14 shows an embodiment in which the hoist device A is used for a vehicle T. In this embodiment, instead of a conventional device of oil-hydraulic or air cylinder type, the hoist device A is used for a jack Al always equipped in the vehicle T, a jack A2 independently used for the vehicle, a strut lifting device A3 of a winding crane K provided with a hook F, an arm extending device A4 of a base facility H for supporting the vehicle and a base extending device A5 or the like.

As shown in Figs. 10 to 13, in the above hoist device A, a pair of chains 1, 1 provided with the regulating members 7 are housed in a base machine casing unit 43 in the form of a box and also functioning as a chain housing 5. The actuating section 1a is extended and retracted (advanced and retreated) by the drive unit 3 having a motor 30 externally or internally installed with the chains 1, 1 or an input shaft 34 driven by power or manually by engaging a handle 35 therewith. The input shaft 34 may be driven by detachably installing a portable drive unit 35 such as an electrically-driven driver and an electrically-driven drill thereto.

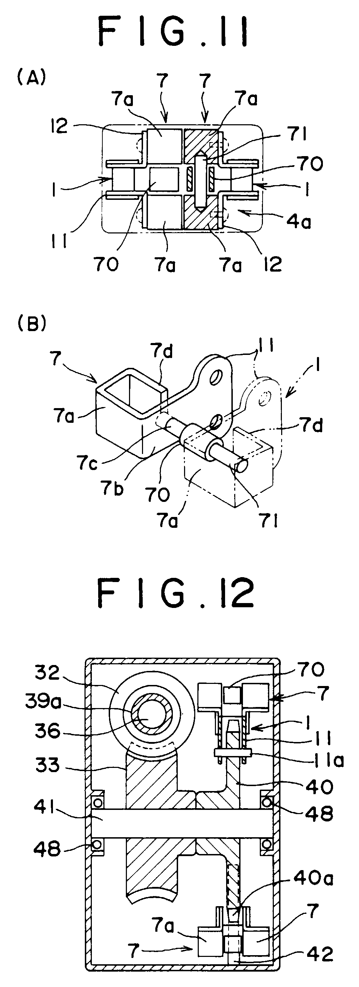

That is, this hoist device A comprises a push-out section 4 for axially supporting left and right drive sprockets (driving wheels) 40 driven to be rotated normally and reversely through a transmission mechanism 31 which may maintain the drive and stop positions as will be described later, and housings 5, 5 communicating with both sides of a pay-out route 4a in the pay-out section 4 to house the other ends of the left and right chains 1 individually. In this embodiment, a link plate 11 on the housing end side is wound on the drive sprocket 40, and in this state, each chain 1 is attached and supported by a connection pin 11a, as shown in Figs. 10 and 12.

Each regulating member 7 in this embodiment has a slide portion (roller) 70 provided at a portion which is in contact with the above guide 42, and as a result, the chain 1 is more smoothly advanced and retreated.

That is, as shown in Fig. 11 (A), a supporting shaft 71 rotatably extending through the above roller 70 is supported by left and right regulating blocks 7a, 7a from both sides, and in this state, each regulating member 7 is attached to a link of the chain 1.

This structure is provided to prevent a sprocket tooth 40a from being worn by bringing the roller 70 into rolling contact with the above guide 42.

As shown in Figs. 10 and 12, the rotating shafts 41, 41 for axially supporting the above drive sprockets 40 are axially supported by the casing 43 through the respective bearings 48. The worm gear 33 is engaged with the driving wheel 40 above the rotating shaft 41 so that the worm gear is rotated integrally with the driving wheel. The worms 32, 32 for driving the left and right worm gears 33 in engagement therewith are fixed to a single worm shaft 36. The worm shaft 36 is put close to the driving wheels 40, 40, and in this state, both ends of the worm shaft are supported by the casing 43 through the respective bearings 48 so that the worm shaft is rotated normally and reversely. The two sets of worms 32 and worm gears 33 are subjected to thread cutting in the opposite directions, and the driving wheels 40, 40 are rotated in the opposite directions by the rotation of the worm shaft 36.

When the above chains 1, 1 are advanced and retreated, force in the opposite directions is applied to the driving shaft 36 right and left through a pair of worms 32, 32. Thus, in order to balance the force in the opposite directions with each other, a cylindrical shaft 39a for receiving compressive force is fitted to the driving shaft 36 between the worms 32, 32, and a cylindrical shaft 39b for receiving expansion force is fitted outside both the worms 32.

On the other hand, a worm gear 38 is also fixed to one end of the above driving shaft 36, and a worm 37 fixed to the input shaft 34 is engaged with the worm gear 38, so that a transmission mechanism 31' similar to the transmission mechanism 31 is provided in addition to the transmission mechanism 31.

Each regulating member 7 may be formed to have the slide portion 70, as shown in Fig. 11 (B). That is, each regulating member 7 has an attaching piece 7b extending from the side of the regulating member so that the left and right link plates 11, 11 of the chain may take the substantially symmetrical shape. The attaching piece 7b is bent to the side to form a regulating piece 7a. Both sides of an attaching pin 71 provided with the roller 70 are inserted and supported in mounting holes 7c bored in the center of the above attaching pieces 7b. Each end of the attaching pin 71 is prevented from being dropped by the end of a stopper piece 7d bent inward from the regulating piece 7a. Accordingly, the regulating member 7 and the slide portion 70 are integrated with the link plate 11, resulting in reduction of the weight.

The chain 1 and the regulating member 7 may be made of not only a steel material but also a plastic or ceramic material or the like according to a purpose. When the plastic or ceramic material or the like is used, it is possible to enhance heat resistance and corrosion resistance in case of using as a linearly reciprocating apparatus used under the environment of high temperature and ultra-low temperature, in the chemical atmosphere, and under the environment polluted by sludge and others. Incidentally, a flexible belt-like member may be also used, instead of the chains 1, 1.

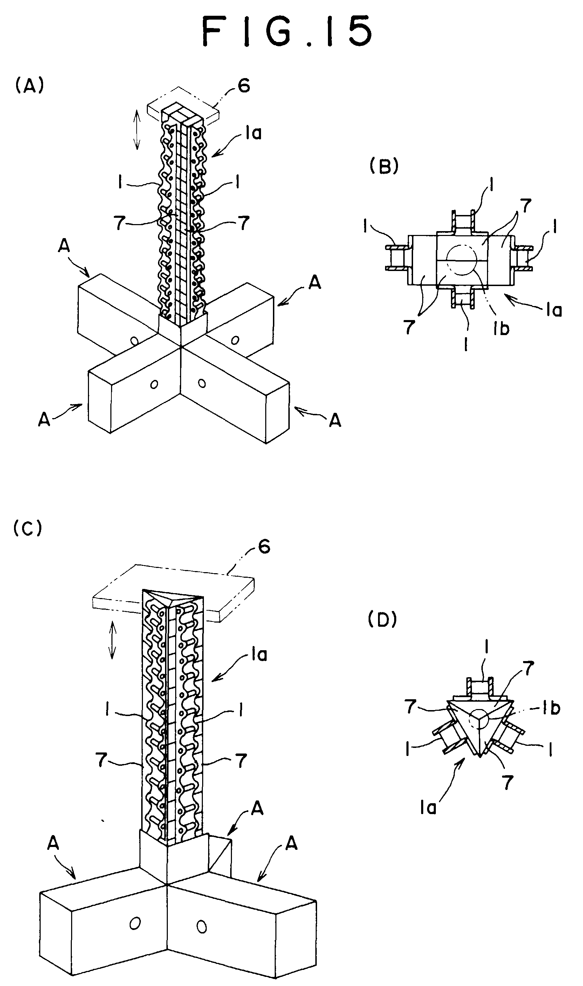

As shown in Fig. 15, three or more chains may also be used as the chain 1 in the above embodiments to form the actuating section 1a. In this case, it is possible to enhance the rigidity of the actuating section 1a in proportion to the increment of chains 1 or more.

That is, in an embodiment shown in Fig. 15 (A), the actuating section 1a is constituted by four chains 1 which are opposed to each other such that the regulating members 7 are combined inwardly together as shown in Fig. 15 (B). In this case, the hoist device A is arranged in the form of a cross.

In an embodiment shown in Fig. 15 (C), the actuating section 1a is constituted by three chains 1 which are arranged in the triangular form when viewed from the top as shown in Fig. 15 (D) and are opposed to one another such that the regulating members 7 are combined inwardly together.

These embodiments are characterized in that a simple combination of the small number of chains 1 enables formation of the actuating section 1a which exerts high rigidity, and bending in all directions may be prevented more securely.

Further, it is possible to form each regulating member 7 having a hollow passage 1b formed inside the actuating section 1a, while the regulating members 7 are joined together inside the opposite chains 1 as described above. Otherwise, the regulating members 7 may be appropriately combined together, and as a result, a desired insertion member (not shown) may be formed to be capable of being inserted into the passage 1b.

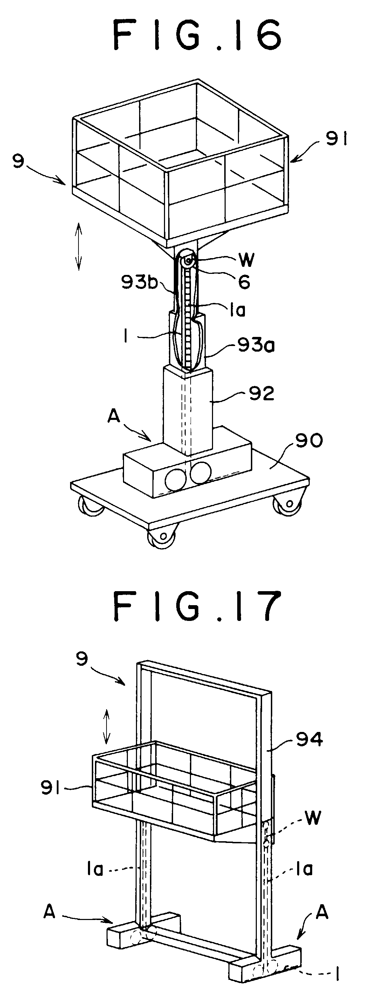

A description will now be given of embodiments when the hoist device A constituted as described above is applied to various working apparatuses with reference to Figs. 16 to 21.

Fig. 16 shows a lifting machine 9, in which the hoist device A is installed on a carriage 90 to vertically move a ramp 91.

A cylindrical strut 92 is vertically provided on this hoist device A, and the suitable number of slide struts 93a, 93b, --- provided with the above ramp 91 are fitted in stages to the inside of the strut 92. Further, a connection member 6 for the chain 1 and the ramp 91 as an actuated member W are connected together at the upper end of the inside. Therefore, the ramp 91 with persons, articles or the like loaded thereon is vertically moved by the actuation of the hoist device A.

As a second application embodiment, Fig. 17 shows a lifting machine 9, in which the hoist device A is constituted in the base end of a lift guide frame 94 in the form of a gate to vertically move a ramp 91.

In this embodiment, the chain 1 is advanced and retreated within the right and left guide frames 94 for guiding the ramp 91. The chain 1 is connected to a connection member 6 provided at each top of the chain to allow the ramp 91 to be vertically moved along the frames 94.

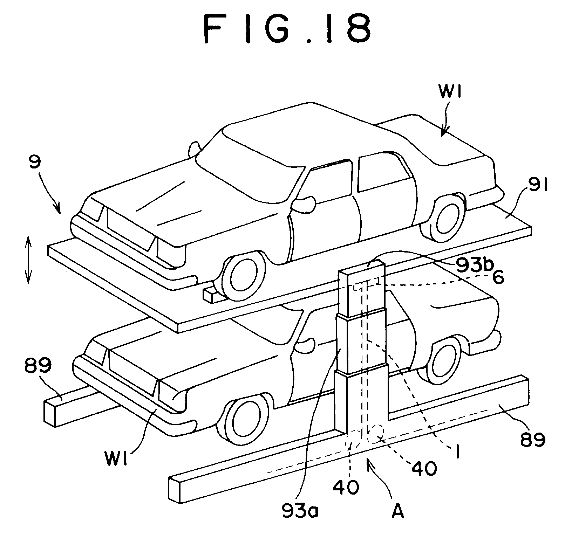

Fig. 18 shows an application embodiment, in which the hoist device A is used for a lifting machine 9 serving as parking facilities of two stages. In this embodiment, the drive sprockets 40 and the chain 1 are provided in a lower frame 89 formed as both of a housing and a pay-out section, and the actuating section 1a is connected to a ramp (an actuated member W) 91 on which an automobile W1 is loaded, and supports the ramp so that the ramp is capable of being vertically moved. Reference numerals 93a and 93b denote slide struts, in which the chain 1 is provided, and the slide struts constitute a lifting strut for preventing the ramp 91 from being tilted to the side.

Therefore, the parking facilities 9 constituted as described above are not required to use a lifting drive mechanism using a hydraulic cylinder, screws or ropes which have been conventionally required.

The housing 5 for the chain 1 is constituted in the lower frame 89 to thereby provide the compact parking facilities 9.

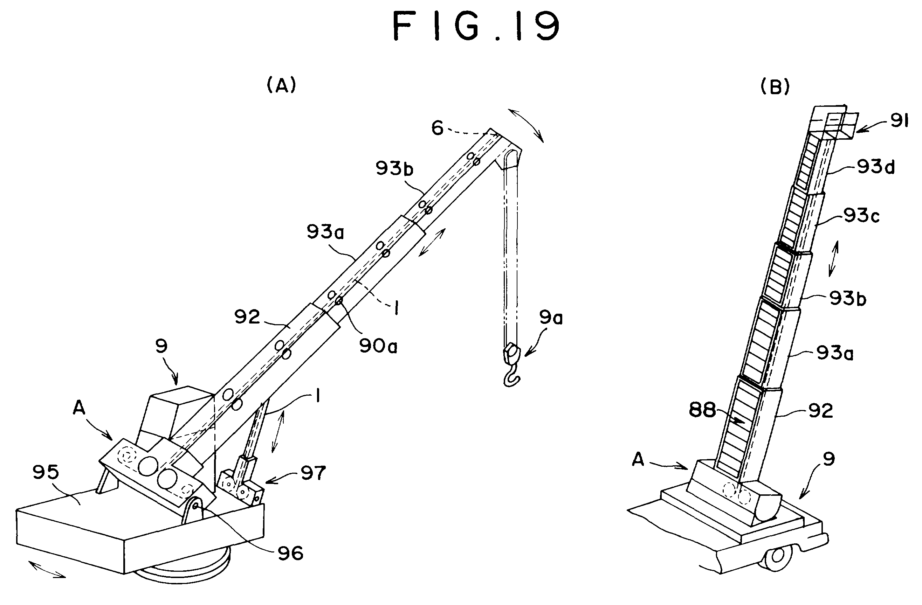

Fig. 19 (A) shows an application embodiment, in which the hoist device A is used for a lifting machine 9 which is a crane. In this embodiment, a strut provided with a hook 9a hung by a rope at the top is composed of telescopically inserted struts 92, 93a, 93b, --- of multiple stages respectively having chain guides 90a, ---, and the base end of the strut is supported by a base frame 95 through pivotal supporting points 96, while being supported by a chain cylinder (the hoist device A) 97 so that the angle of the strut is capable of being varied.

Fig. 19 (B) shows an application embodiment, in which the hoist device A is used for a lifting machine 9 which is a ladder truck such as a fire truck. In this embodiment, a strut is constituted similarly to that as shown in Fig. 19 (A), while a ladder 88 is formed on each strut 92, 93a to 93d, --- , and a ramp 91 on which a fireman is on board is installed at the uppermost end.

The strut extended and retracted by the hoist device A as described above does not need any oil hydraulic cylinder which is large in size, heavyweight, and requires a space for installation of many auxiliary equipments. The extent of the strut extended may be set freely depending upon the length of the chain 1, and it is possible to provide a telescopic strut device which does not require excessive weight and space.

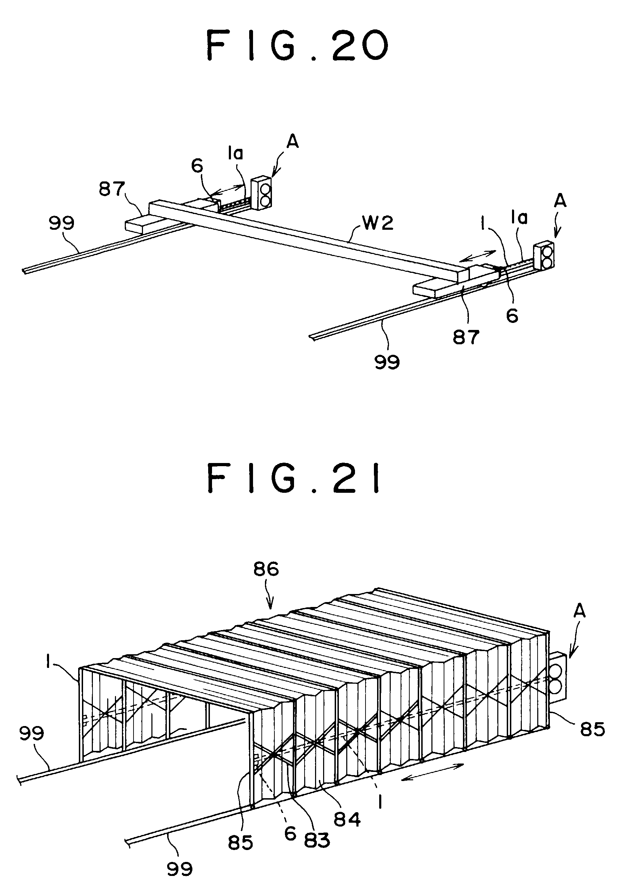

Fig. 20 shows an application embodiment, in which the hoist device A is used for a reciprocating carriage 87. Two carriages are installed on left and right rails 99, 99 so that the carriages may travel, and one end of each carriage is connected to a connection member 6 of the hoist device A serving as a reciprocating mechanism installed at the end of each rail 99. 'W2' denotes a steel material and others loaded and carried in the shape of a bridge between both carriages 87, 87.

In this embodiment, the carriage 87 loaded with a heavy steel material W2 and others and frequently reciprocated does not require any conventional reciprocating means of a winding wire rope type.

Fig. 21 shows an application embodiment, in which the hoist device A is used for an accordion curtain 86. In the above curtain 86, frames 85, --- in the form of a gate movable on rails 99, 99 are connected to each other through links 83 in the form of a pantagraph. A flexible curtain 84 is provided between the frames 85, 85, and the hoist device A is installed on the rear end frame 85. Further, a connection member 6 for the chain 1 is connected to the front end frame 85 to perform speedy extension and retraction of the curtain.

In this embodiment, an extending/retracting mechanism itself may be directly installed on the curtain 86.

Since the same reference numeral in Figs. 1 to 20 denotes the same portion or a portion having the same function, the description of the parts or portions denoted by each same reference numeral will be omitted.

The characteristics of the present invention described in the above embodiments will be summarized as follows:

According to the first aspect, there is provided a rod-like hoist unit, in which two or more hoist units (1) including a bendable chain or belt are put close to each other along a single axial core so that the tops of the above hoist units (1) are integrally connected and fixed in close vicinity to each other, multiple regulating members (7) are provided to be protruded from the opposite peripheral faces of the hoist units (1) so as to hold the hoist units (1) in the form of a single rod by regulating all the hoist units (1) from being freely bent in such a state that the hoist units (1) are brought into close contact with and overlapped with each other, each regulating member (7) is formed such that these regulating members put close to each other are allowed to be curved outward and then separated from each other on the side opposite to the side, on which the hoist units (1) are connected to the regulating members, a driving wheel (40) brought into contact with the outer periphery of each hoist unit (1) is axially supported on the side of each base end of the hoist units (1) put close to each other in the form of a rod so that the driving wheel is rotated normally and reversely, and a drive unit (3) is provided for rotating the driving wheels (40) to pay out the hoist units (1) in the form of a rod or house the hoist units (1).

According to the second aspect, the faces to be overlapped of the regulating members (7) are protruded sideward from the hoist units (1) by an extent larger than the width of each hoist unit (1).

According to the third aspect, the contact faces of the regulating members (7) are formed along the axial core of a rod.

According to the fourth aspect, the regulating member (7) of one of the opposite hoist units (1) is alternately interposed between the regulating members of the other hoist unit (1), and engaged therewith so that the regulating members (7) of the opposite hoist units are overlapped with each other.

According to the fifth aspect, the regulating members (7) are structured such that two faces to be overlapped of each regulating member (7) are inclined so as to be matched with two faces to be overlapped of the regulating member (7) on the other side, and the inclined faces act so as to put the hoist units (1) close to each other in response to a pressure load applied in the axial core direction of the rod.

According to the sixth aspect, the faces of each regulating member to be overlapped with the faces of the adjacent regulating member (7) are formed such that the regulating members (7) themselves are engaged with each other in an overlapped state, and the opposite hoist units (1) themselves are fixed to each other.

According to the seventh aspect, each hoist unit (1) is constituted by a chain, and a driving wheel (40) is constituted by a chain sprocket on which the hoist unit (1) is wound for driving.

According to the eighth aspect, each regulating member (7) is protruded in the center between connection pins (11a) of chain links (11) every adjacent second chain link (11).

According to the ninth aspect, each regulating member (7) is formed integrally with a link plate (11) by bending the regulating member so as to protrude the side end of the chain link (11).

According to the tenth aspect, a worm gear (33) integrally rotated with the driving wheel (40) and a worm (32) axially supported so as to rotate the worm gear (33) in engagement therewith are provided in the drive unit (3).

According to the eleventh aspect, two worm gears (33) reverse to each other in the direction of thread cutting so as to pay out and house two opposite hoist units (1) are axially supported by a single driving shaft (36) and engaged with two worms (32) directed reverse to each other, and two driving shafts (40) are simultaneously and integrally rotated by the rotation of the above driving shaft (36).

According to the twelfth aspect, two or more hoist units (1) including a bendable chain or belt are put close to each other along a single axial core, the tops of the above hoist units (1) are integrally connected and fixed in close vicinity to each other, multiple regulating members (7) are provided to be protruded from the opposite peripheral faces of the hoist units (1) so as to hold the hoist units (1) in the form of a single rod by regulating all the hoist units (1) from being freely bent in such a state that the hoist units are brought into close contact with and overlapped with each other, each regulating member (7) is formed such that these regulating members put close to each other are allowed to be curved outward and then separated from each other on the side opposite to the side, on which the hoist units (1) are connected to the regulating members, a driving wheel (40) brought into contact with the outer peripheral of each hoist unit (1) is axially supported on the side of each base end of the hoist units (1) put close to each other in the form of a rod so that the driving wheel is rotated normally and reversely, a drive unit (3) is provided for rotating the driving wheels (40) to pay out the hoist units (1) in the form of a rod or house the hoist units, and a housing (5) is provided on the housing side of each hoist unit (1) through the driving wheel (40) to house the hoist unit (1) separated and driven to the housing side.

According to the thirteenth aspect, the housing (5) has a housing guide (52) provided in a cover case (51) to spirally guide the end on the housing side of the hoist unit (1) for housing.

According to the fourteenth aspect, the housing (5) has a housing guide (52) provided in a cover case (20) to spirally guide the end on the housing side of the hoist unit (1) for housing.

According to the fifteenth aspect, a housing mechanism of the housing (5) is that the housing end of the hoist unit (1) is attached and fixed to the periphery of the driving wheel (40), and the hoist unit (1) is wound on the driving wheel (40) itself for housing.

### POSSIBILITY OF INDUSTRIAL UTILIZATION

A rod-like hoist unit according to the present invention is independently pushed out and retracted, and as a result, is available in an extremely wide range as a reciprocating mechanism serving as a mechanical component.

The present invention may be also applied to various lifting devices, jacks, and telescopically driving devices for tower portions of cranes and ladder trucks.

## Claims

1. A rod-like hoist unit, comprising:
two or more hoist units (1) including a bendable chain or belt and put close to each other along a single axial core so that the tops of said hoist units (1) are integrally connected and fixed in close vicinity to each other;
multiple regulating members (7) provided to be protruded from the opposite peripheral faces of the hoist units (1) so as to hold the hoist units (1) in the form of a single rod by regulating all the hoist units (1) from being freely bent in such a state that the hoist units (1) are brought into close contact with and overlapped with each other;
each of said regulating members (7) being formed such that these regulating members put close to each other are allowed to be curved and then separated from each other on the side opposite to the side, on which the hoist units (1) are connected to the regulating members;
a driving wheel (40) brought into contact with the periphery of each hoist unit (1) and axially supported on the side of each base end of the hoist units (1) put close to each other in the form of a rod so that the driving wheel is rotated normally and reversely; and
a drive unit (3) for rotating the driving wheels (40) to pay out the hoist units (1) in the form of a rod or house the hoist units.

2. A rod-like hoist unit according to claim 1, wherein the faces to be overlapped of said regulating members (7) are protruded sideward from said hoist units (1) by an extent larger than the width of each hoist unit (1).

3. A rod-like hoist unit according to claim 1, wherein the contact faces of the regulating members (7) are formed along the axial core of a rod.

4. A rod-like hoist unit according to claim 1, wherein the regulating member (7) of one of the opposite hoist units (1) is alternately interposed between the regulating members (7) of the other hoist unit (1), and engaged therewith so that the regulating members are overlapped with each other.

5. A rod-like hoist unit according to claim 4, wherein the regulating members are structured such that two faces to be overlapped of each regulating member (7) are inclined so as to be matched with two faces to be overlapped of the regulating member (7) on the other side, and the inclined faces act so as to put the hoist units (1) close to each other in response to a pressure load applied in the axial core direction of a rod.

6. A rod-like hoist unit according to claim 4, wherein the faces of each regulating member (7) to be overlapped with the faces of the adjacent regulating member (7) are formed such that the regulating members (7) themselves are engaged with each other in an overlapped state, and the opposite hoist units (1) themselves are fixed to each other.

7. A rod-like hoist unit according to claim 1, wherein each hoist unit (1) is constituted by a chain, and the driving wheel (40) is constituted by a chain sprocket on which the hoist unit (1) is wound for driving.

8. A rod-like hoist unit according to claim 7, wherein each regulating member (7) is protruded in the center between connection pins (11a) of chain links (11) every adjacent second chain link (11).

9. A rod-like hoist unit according to claim 7 or 8, wherein each regulating member (7) is formed integrally with the chain link (11) by bending the regulating member so as to protrude the side-end of the chain link (11).

10. A rod-like hoist unit according to claim 1, wherein a worm gear (33) integrally rotated with the driving wheel (40) and a worm (32) axially supported so as to rotate said worm gear (33) in engagement therewith are provided in the drive unit (3).

11. A rod-like hoist unit according to claim 11, wherein two worm gears (33) reverse to each other in thread cutting direction to pay out and house two opposite hoist units (1) are axially supported by a single driving shaft (36) and engaged with two worms (32) directed reverse to each other, and two driving wheels (40) are simultaneously and integrally rotated by the rotation of said driving shaft (36).

12. A rod-like hoist unit, comprising:
two or more hoist units (1) including a bendable chain or belt and put close to each other along a single axial core such that the tops of said hoist units (1) are integrally connected and fixed in close vicinity to each other;
multiple regulating members (7) provided to be protruded from the opposite peripheral faces of the hoist units (1) so as to hold the hoist units (1) in the form of a single rod by regulating all the hoist units (1) from being freely bent in such a state that the hoist units (1) are brought into close contact with and overlapped with each other;
each of said regulating members (7) being formed such that these regulating members put close to each other are allowed to be curved outward and then separated from each other on the side opposite to the side, on which the hoist units (1) are connected to the regulating members;
a driving wheel (40) brought into contact with the periphery of each hoist unit (1) and axially supported on the side of each base end of the hoist units (1) put close to each other in the form of a rod so that the driving wheel is rotated normally and reversely;
a drive unit (3) for rotating said driving wheels (40) to pay out the hoist units (1) in the form of a rod or house the hoist units; and
a housing (5) provided on the housing side of each hoist unit (1) through the driving wheel (40) to house the hoist unit (1) separated and driven to the housing side.

13. A rod-like hoist unit according to claim 12, wherein the housing (5) has a housing guide (52) provided in a cover case (51) to spirally guide the housing end of the hoist unit (1) for housing.

14. A rod-like hoist unit according to claim 12, wherein the housing (5) has a housing guide (52) provided in a cover case (20) to spirally guide the housing end of the hoist unit (1) for housing.

15. A rod-like hoist unit according to claim 12, wherein a housing mechanism of the housing (5) is that the housing end of the hoist unit (1) is attached and fixed to the periphery of the driving wheel (40), and the hoist unit (1) is wound on the driving wheel (40) itself for housing.
